# EUROPÄISCHE PATENTSCHRIFT

(11) **EP 3 997 724 B1**
(45) Veröffentlichungstag und Bekanntmachung des Hinweises auf die Patenterteilung: **15.04.2026**
(21) Anmeldenummer: 20764011.1
(22) Anmeldetag: 12.08.2020
(51) Int. Cl.: H01H 31/36, H01H 33/666, H02B 13/035

(54) **EINSÄULEN-TRENNSCHALTER MIT VAKUUM-SCHALTRÖHRE ALS HILFSKONTAKTSYSTEM**
PANTOGRAPH DISCONNECTOR WITH VACUUM INTERRUPTER AS AUXILIARY CONTACT SYSTEM
SECTIONNEUR MONOCOLONNE AVEC AMPOULE À VIDE EN TANT QUE SYSTÈME DE CONTACT AUXILIAIRE

(30) Priorität: 03.09.2019 DE 102019213320
(43) Veröffentlichungstag der Anmeldung: 18.05.2022
(73) Patentinhaber: Siemens Energy Global GmbH & Co. KG, 81739 München (DE)
(72) Erfinder: ROHMANN, Mariusz, 13469 Berlin (DE); SCHRÄDER, Dirk, 13158 Berlin (DE)
(86) Internationale Anmeldenummer: PCT/EP2020/072586
(87) Internationale Veröffentlichungsnummer: WO 2021/043548

(56) Entgegenhaltungen:
- EP-A2- 0 104 599
- DE-A1- 3 307 606
- DE-A1- 3 418 837
- FR-A1- 2 693 837
- US-A1- 2012 048 692

## Beschreibung

Die vorliegende Erfindung betrifft eine Schalteranordnung für einen luftisolierten Hochspannungs-Trennschalter mindestens umfassend einen Haupt- und einen Hilfsschalter, wobei der Hauptschalter einen Einsäulen-Trennschalter mit mindestens einem beweglichen Kontaktarm und einem feststehendem Gegenkontaktstück umfasst; und der Hilfsschalter eine Vakuum-Schaltkammer mit einem elektrischen Schalter und mindestens einem an dem Schalter angeordneten Betätigungselement umfasst, wobei die Vakuum-Schaltkammer elektrisch leitend auf dem Gegenkontaktstück des Hauptschalters angeordnet ist; und wobei der elektrische Schalter der Vakuum-Schaltkammer ausgebildet ist durch den beweglichen Kontaktarm des Hauptschalters über das Betätigungselement eine elektrisch leitende Verbindung zwischen dem Gegenkontakt des Hauptschalters und dem beweglichen Kontaktarm des Hauptschalters herzustellen oder zu unterbrechen, wobei das Betätigungselement der Vakuum-Schaltkammer so angeordnet ist, dass der elektrische Schalter der Vakuum-Schaltkammer vor dem Schließen des Hauptschalters schließt und nach dem Öffnen des Hauptschalters öffnet.

Die sichere und wartungsarme Kontrolle hoher Ströme oder hoher Spannungen ist heutzutage umso wichtiger, da im Zuge der Energiewende die Distanzen zwischen dem Ort der Erzeugung und dem Ort des Verbrauches der elektrischen Energie immer größer werden. Dadurch bedingt werden immer größere Strommengen über die bestehende Infrastruktur geleitet, welches sich im besonderen Maße auf die Störanfälligkeit des gesamten Systems auswirkt. Insofern werden sicherere und wartungsärmere Einzelkomponenten umso wichtiger. Eine Möglichkeit zum sichtbaren Trennen einer Strombahn im Hochspannungsbereich, d. h. insbesondere im Bereich von bis zu 1200 kV Spannung, besteht in dem Einsatz von Einsäulen-Trennschaltern. Ein typischer Aufbau eines Einsäulen-Trennschalters, wie z. B. aus der DE 33 07 606 A1 und der EP O 104 599 A2 bekannt, umfasst dabei wenigstens einen Kontakt mit einem beweglichen und einem festen Kontaktstück. Diese Grundbauform hat sich bewährt.

Auch in der Patentliteratur wird der Aufbau unterschiedlicher Einsäulen-Trennschalter behandelt.

So beschreibt beispielsweise die DE 10 2016 214 372 A1 einen Kontaktarm für einen Einsäulen-Trennschalter, mit wenigstens einem Profilkörper und mit wenigstens einem Kontaktelement, wobei der wenigstens eine Profilkörper stangenförmig ausgebildet ist und wobei das wenigstens eine Kontaktelement stabförmig ausgebildet ist, wobei das Kontaktelement ein T-Profil aufweist.

Des Weiteren beschreibt die DE 3 412 449 A1 ein Kontaktsystem für Hochspannungs-Trennschalter, insbesondere Greifertrennschalter, mit einem Hauptkontaktstück, einem damit zusammenwirkenden Gegenkontaktstück und einer diesen beiden Kontaktstücken parallelschaltbaren, am Gegenkontaktstück angeordneten, vom Hauptkontaktstück betätigbaren und zur Führung eines Lichtbogens bestimmten Vorkontakteinrichtung, die nach dem Öffnen der beiden Kontaktstücke geöffnet und vor deren Schließen geschlossen wird, wobei ein Teil der Vorkontakteinrichtung vom Gegenkontaktstück elektrisch isoliert getragen ist, und mit einer der Vorkontakteinrichtung in der Ausschaltstellung parallelschaltbaren Potentialausgleichskontaktvorrichtung, wobei die Potentialausgleichskontaktvorrichtung von dem Gegenkontaktstück und den beweglichen Schaltstücken (14c) der Vorkontakteinrichtung gebildet ist und dass das Hauptkontaktstück bei geschlossener Potentialausgleichs-Kontaktvorrichtung durch ein zusätzlich zum vorhandenen gasförmigen Isolierstoff vorgesehenes, festes Isoliermittel vom Gegenschaltstück und seiner Vorkontakteinrichtung galvanisch getrennt ist.

Derartige aus dem Stand der Technik bekannte Lösungen können jedoch noch weiteres Verbesserungspotential bieten, insbesondere hinsichtlich der Störungssicherheit und der Verschleißfestigkeit während des Betriebs. Aus der US 2012/048692 A1 sind Leistungsschalter mit Vakuum-Schaltkammer bekannt. Aus der DE 34 18 837 A1 **i**st ein weiterer Trennschalter bekannt. Die Druckschrift FR 2 693 837 A1 offenbart einen Trennschalter, der dem Oberbegriff des Anspruchs 1 entspricht.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung bereitzustellen, welche sich durch eine bessere elektrische Verschleißfestigkeit der Komponenten im Betrieb auszeichnet und welche den steigenden Schaltleistungsanforderungen für Trennschaltertypen gerecht wird.

Die Lösung der Aufgabe erfolgt erfindungsgemäß zumindest zum Teil durch eine Schalteranordnung für einen luftisolierten Hochspannungs-Trennschalter mit den Merkmalen des Anspruchs 1. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder einer beliebigen Kombination einen Gegenstand der Erfindung darstellen können, wenn sich aus dem Kontext nicht eindeutig das Gegenteil ergibt.

Die vorliegende Erfindung betrifft somit eine Schalteranordnung für einen luftisolierten Hochspannungs-Trennschalter mindestens umfassend einen Haupt- und einen Hilfsschalter, wobei der Hauptschalter einen Einsäulen-Trennschalter mit mindestens einem beweglichen Kontaktarm und einem feststehendem Gegenkontaktstück umfasst; und
der Hilfsschalter eine Vakuum-Schaltkammer mit einem elektrischen Schalter und mindestens einem an dem Schalter angeordneten Betätigungselement umfasst, wobei die Vakuum-Schaltkammer elektrisch leitend auf dem Gegenkontaktstück des Hauptschalters angeordnet ist; und
wobei der elektrische Schalter der Vakuum-Schaltkammer ausgebildet ist durch den beweglichen Kontaktarm des Hauptschalters über das Betätigungselement eine elektrisch leitende Verbindung zwischen dem Gegenkontakt des Hauptschalters und dem beweglichen Kontaktarm des Hauptschalters herzustellen oder zu unterbrechen, wobei das Betätigungselement der Vakuum-Schaltkammer so angeordnet ist, dass der elektrische Schalter der Vakuum-Schaltkammer vor dem Schließen des Hauptschalters schließt und nach dem Öffnen des Hauptschalters öffnet.

Eine derartige Anordnung kann gegenüber den aus dem Stand der Technik bekannten Lösungen signifikante Vorteile aufweisen, wie dies nachstehend im Detail beschrieben ist. Insbesondere kann eine derartige Anordnung die Standzeit des gesamten Schaltelementes erhöhen und somit die Störanfälligkeit eines Stark- oder Hochspannungsstromnetzes verbessern. Insbesondere ist es durch den Einsatz einer Vakuum-Schaltkammer als Teil des Schaltersystems möglich, die Kontakterosion durch ein schnelleres Löschen auftretender Lichtbögen zu reduzieren. Vorteilhafterweise kann die Vakuum-Schaltkammer auch durch die Wahl ihrer Einzelkomponenten auf die konkret vorliegenden Schaltaufgaben angepasst werden. Durch die Vakuum-Schaltkammer werden die Kommutierungsströme kontrolliert, in dem Sinne, dass die Vakuum-Schaltkammer beim Schließen des Hauptschalters vorläuft und somit den Hauptschalter schützt. Beim Öffnen des Hauptschalters läuft die Vakuum-Schaltkammer nach und schützt ebenso den Hauptkontakt durch das Schalten der Kommutierungsströme. In Summe ergibt sich durch diese Schaltanordnung eine hohe Bewegungsgleichmäßigkeit und eine Erhöhung der schaltbaren Kommutierungsströme und -spannungen. In Summe trägt dies zu einem sehr reproduzierbaren Schaltvorgang unter Schutz des Hauptschalters vor zu starken und ungesteuerten elektrischen Entladungen bei.

Die vorliegende Schalteranordnung ist geeignet für einen luftisolierten Hochspannungs-Trennschalter und umfasst mindestens einen Haupt- und einen Hilfsschalter. Hochspannungsschalter sind dabei elektrische Schalter für Spannungen über 1 Kilovolt (kV), wobei die Schalteranordnung in der Lage ist, sowohl einen fast leistungslosen Trennvorgang von elektrischen Anlagenteilen als auch das Ein- und Ausschalten hoher Lasten zu gewährleisten. Die Schalteranordnung umfasst dabei mindestens zwei unterschiedliche elektrische Schalter, welche entweder den Zustand leitend oder nichtleitend einnehmen können, wobei insbesondere der Zeitpunkt der Änderung des elektrischen Zustandes von beiden Schaltelementen unabhängig voneinander geändert werden kann. Geeignete Spezifikationen für die Schalteranordnung liegen beispielsweise in einem Spannungsbereich von 36 kV bis 800 kV und bei einer Stromleitfähigkeit von bis zu 5000 A (80 kA - 1s). Die Schalteranordnung kann beispielsweise der Spezifikation nach IEC 62271-102 entsprechen.

Der Hauptschalter der Schalteranordnung ist ein Einsäulen-Trennschalter, welcher mindestens einen beweglichen Kontaktarm und ein feststehendes Gegenkontaktstück umfasst. Der Hauptschalter ist also ein Pantograph, welcher durch Scherenarme mit der Sammelschiene verbunden ist. Der Pantograph ermöglicht eine vertikale Trennstrecke mit einer Sammelschienen-Verbindung und erlaubt sowohl eine Diagonal- wie auch Parallelanordnung. Der Hauptschalter ist für flexible und starre Sammelschienen anwendbar und kann beispielsweise den Anforderungen nationaler und internationaler Standards wie IEC, ANSI, GOST R und GB entsprechen. Der elektrische Kontakt wird dabei über mindestens einen Kontaktarm hergestellt, welcher bewegbar ausgeführt ist und die Zustände "vom elektrischen Gegenkontakt getrennt" und "mit dem elektrischen Gegenkontakt verbunden" einnehmen kann.

Der Hilfsschalter der Schalteranordnung ist eine Vakuum-Schaltkammer mit einem elektrischen Schalter und mindestens einem an dem Schalter angeordneten Betätigungselement, wobei die Vakuum-Schaltkammer elektrisch leitend auf dem Gegenkontaktstück des Hauptschalters angeordnet ist. Bei der Vakuum-Schaltkammer handelt es sich also um einen gasisolierten Hilfsschalter, welcher permanent mit dem Gegenkontaktstück des Hauptschalters in elektrisch leitender Verbindung steht.

Der elektrische Schalter der Vakuum-Schaltkammer ist ausgebildet, um durch den beweglichen Kontaktarm des Hauptschalters über das Betätigungselement eine elektrisch leitende Verbindung zwischen dem Gegenkontakt des Hauptschalters und dem beweglichen Kontaktarm des Hauptschalters herzustellen oder zu unterbrechen. Die Vakuum-Schaltkammer weist also ein Betätigungselement auf, welches mit dem Kontaktarm des Hauptschalters mechanisch interagiert und als Funktion der Stellung des Kontaktarms des Hauptschalters entweder in eine elektrisch leitende oder nichtleitende Position gebracht werden kann. Ebenso kann beim Fehlen des mechanischen Kontaktes zwischen dem Kontaktarm des Hauptschalters und dem Betätigungselement des Hilfsschalters der Schalter in einer nichtleitenden Position vorliegen.

Das Betätigungselement der Vakuum-Schaltkammer ist so angeordnet, dass der elektrische Schalter der Vakuum-Schaltkammer vor dem Schließen des Hauptschalters schließt. Das Betätigungselement läuft also auf Grund des mechanischen Kontaktes zum Kontaktarm des Hauptschalters "vor" und der elektrische Schalter in der Vakuumkammer schließt zeitlich, eine entsprechende mechanische Betätigung vorausgesetzt, vor dem Schließen des Hauptschalters.

Das Betätigungselement der Vakuum-Schaltkammer ist so angeordnet, dass der elektrische Schalter der Vakuum-Schaltkammer nach dem Öffnen des Hauptschalters öffnet. Fehlt die mechanische Betätigung durch den Kontaktarm des Hauptschalters, so öffnet der Hilfsschalter entsprechend wieder. Der Zeitpunkt der Öffnung liegt hinter der Öffnung des Hautschalters, so dass auch noch nach dem Öffnen des Hauptschalters ein Kommutierungsstrom durch die Schaltung der Vakuum-Schaltkammer fließt.

In einer bevorzugten Ausgestaltung der Schalteranordnung kann der Hauptschalter zwei bewegliche Kontaktarme und der Hilfsschalter zwei Betätigungselemente umfassen. Zum besonders gleichmäßigen Ein- und Ausschalten der Ströme hat sich eine Anordnung mit zwei Kontaktarmen des Hauptschalters als besonders geeignet erwiesen. Die beiden Kontaktarme können dabei ein oder aber auch zwei unabhängige Betätigungselemente des Hilfsschalters bewegen. Auf diese Art und Weise lassen sich besonders gleichmäßige und sichere Schaltvorgänge erreichen.

Im Rahmen einer bevorzugten Ausführungsform der Schalteranordnung kann die Vakuum-Schaltkammer über ein Verbindungsstück aus Stahl oder aus Aluminium auf dem Gegenkontaktstück des Hauptschalters angeordnet sein. Diese elektrische Verbindungslösung mit dem Gegenstück des Hauptschalters hat sich als besonders zuverlässig und langlebig erwiesen. Der Stahl kann dabei insbesondere ein nichtrostender Stahl sein. Aluminium kann bevorzugt in den Fällen eingesetzt werden, in denen das Gewicht der Schalteranordnung wichtig ist.

Innerhalb eines bevorzugten Aspektes der Schalteranordnung kann das Betätigungselement der Vakuum-Schaltkammer mindestens abschnittweise eine elektrisch isolierte Kontaktstelle aufweisen. Die Kontaktstellen des Betätigungselements der Vakuum-Schaltkammer können dabei aus Materialien des Kontaktsystems entsprechend ausgestaltet sein (bewegte Kontaktstellen, z.B. versilbertes Kupfer) oder aber durch eine flexible Leitung gebrückt werden, welche den langen senkrechten Hebel mit dem Drehpunkt der Vakuumschaltkammer verbindet und damit den Stromfluss zu den langen waagerechten Elementen des Betätigungselementes und schließlich zum bewegten Kontakt des Gerätes gewährleistet. Der Stromfluss und damit die bewegten Stellen können zudem isoliert als Lagerelemente ausgeführt sein, womit einem Verschweißen der bewegten Kontaktstellen des Betätigungselements der Vakuum-Schaltkammer vorgebeugt wird. Letzteres erfordert überbrückende flexible Leitungen. Diese Anordnung kann einen sicheren und reproduzierbaren Schaltvorgang ermöglichen.

Innerhalb der Charakteristik der Schalteranordnung sind die Betätigungselemente der Vakuum-Schaltkammer mechanisch mit der Vakuum-Schaltkammer gekoppelt angeordnet. Für die Gleichmäßigkeit des Schaltens des Hilfsschalters hat es sich als besonders günstig herausgestellt, dass die Betätigungselemente der Vakuum-Schaltkammer mechanisch an dieser angeordnet sind. Ein Beispiel für eine solche Anordnung ist beispielsweise in den Figuren dargestellt. Durch diese Anordnung ergibt sich eine hohe mechanische Stabilität, mit nur sehr geringen Abweichungen im Schaltweg. Dies kann für die Langlebigkeit der Schalteranordnung vorteilhaft sein.

Für Schaltanforderungen mit hohen Spannungen und sehr niedrigen Strömen (z.B. Kabelentladungen) wird die äußere Isolation der Vakuum-Schaltkammer durch eine Funkenstrecke zusätzlich geschützt. Die Schalteranordnung weist zusätzlich eine parallel zur Vakuum-Schaltkammer geschaltete Schutzfunkenstrecke auf. Die Schutzfunkenstrecke kann beispielsweise bei 30kV ansprechen. Letzteres ist aber eine Funktion der gewählten Spezifikationen der Vakuum-Schaltkammer. Es hat sich zudem als besonders günstig herausgestellt, dass eine Schutzfunkenstrecke parallel zur Vakuum-Schaltkammer geschaltet wird. Dabei wird zweckmäßigerweise eine Überschlagselektrode an einem Ende der Drehwelle der Vakuum-Schaltkammer und die zweite Überschlagselektrode gegenüber auf dem Gegenkontakt leitend montiert. Eine vorteilhafte Ausbildung der Überschlagselektroden ist rund oder kugelfoermig. Das Ende der Drehwelle der Vakuum-Schaltkammer kann für die Anbringung der ersten Überschlagselektrode frei gewählt werden, wobei auf eine genügende Beabstandung zur Vakuum-Schaltkammer auf der einen Seite oder aber zu dem Betätigungselement auf der anderen Seite zu gewährleisten ist.

Innerhalb einer weiteren, bevorzugten Ausgestaltung der Schalteranordnung kann die Vakuum-Schaltkammer zusätzlich eine Abschirmhaube aufweisen und die Vakuum-Schaltkammer, die Betätigungselemente und die Abschirmhaube im nicht geschalteten Zustand jeweils über einen hochohmigen Widerstand mit dem Gegenkontaktstück des Hauptschalters verbunden sein. Diese Ausgestaltung kann die gesamte Schalteranordnung sicherer gestalten und zudem die Eignung der Schaltung in Außenbereichen unter Witterungseinflüssen verbessern. Im ausgeschalten Zustand liegen somit die oben genannten Teile über einen hochohmigen Widerstand mit dem Gegenkontakt an, wobei der hochohmige Widerstand keinen Einfluss auf die Schalthandlungen hat. Diese Anordnung verhindert Korona-Entladungen im ausgeschalteten Zustand des Hilfskontaktsystems. Die Abschirmhaube kann beispielsweise die Vakuum-Schaltkammer zur äußeren Umgebung hin abschirmen. In einer weiteren Ausgestaltung kann der Widerstand zusätzlich über eine Schutzfunkenstrecke verfügen. Dies kann für Fälle von niedrigem Strom bei Nennspannung vorteilhaft sein.

Nach einer bevorzugten Ausführungsform der Schalteranordnung kann die Abschirmhaube aus Aluminium ausgebildet sein und zumindest partiell eine runde Oberfläche aufweisen. Diese Form der Abschirmhaube hat sich sowohl aus elektrischen wie auch aus mechanischen Überlegungen als im Rahmen der erfindungsgemäßen Schalteranordnung als besonders geeignet erwiesen. Die Abschirmhaube weist dabei zumindest in Teilbereichen ihrer Oberfläche die Form eines Kreissegmentes auf. Bevorzugt kann die Abschirmhabe eine Oberfläche aufweisen, welche zumindest abschnittsweise einem vollständigen Viertelkreis entspricht.

Innerhalb eines bevorzugten Aspektes der Schalteranordnung kann die Abschirmhaube mechanisch über einen nichtleitenden Träger auf dem Gegenkontakt befestigt sein. Dieses kann der gleiche Träger sein, welcher für die Aufnahme der Betätigungselemente verwendet wird (radiale Lagerung). Da an diesem Träger keine Stromflussanforderung besteht, beziehungsweise explizit vermieden wird, kann die Befestigungsfläche durchmesserunabhängig ausgeführt werden. Es ergibt sich ein kleiner Radius an der Befestigungsfläche, ähnlich einer klassischen Schelle. Dies ermöglicht die Anwendung von Druckstellen oder -punkten bei runder Form des Gegenkontaktes mit im Vergleich größeren Radius. Diese Anordnung hat sich auf Basis der mechanischen und elektrischen Anforderungen als besonders geeignet herausgestellt.

Innerhalb einer weiteren, vorteilhaften Ausgestaltung der Befestigung des Trägers zur Aufnahme der Betätigungselemente (radiale Lagerung) kann dieser als gleichzeitige Befestigung der Vakuum-Schaltkammer dienen. In diesem Fall kann der Träger metallisch, leitend ausgeführt und unter Berücksichtigung einer ausreichenden Beabstandung der Betätigungselemente angebracht sein, sodass gegebenenfalls ein eintretender Überschlag über eine vorhandene Schutzfunkenstrecke erfolgen kann. Ein besonderer sich ergebender Vorteil kann darin bestehen, die Schelle in der Art auszubilden, dass diese Überschlagselektroden aufweist, beispielsweise in Form kugelförmiger Ausprägungen. Die Überschlagselektroden können der Schelle gegenüber auf dem langen waagerechten Betätigungselement positioniert sein, so dass die Schutzfunkenstrecke mit Hilfe dieser runden waagerechten Betätigungselemente gebildet wird.

In einer weiterhin bevorzugten Ausgestaltung der Schalteranordnung kann das Betätigungselement der Vakuum-Schaltkammer zusätzlich ein Federelement aus Edelstahl umfassen. Es hat sich als besonders geeignet herausgestellt, dass der elektrische Schalter der Vakuum-Schaltkammer über ein Federelement ohne Gegenkraft, d.h. ohne Betätigung durch einen oder mehrere Kontaktarme, immer in eine geöffnete Schaltstellung gezwungen wird. Dies kann die Sicherheit der Hilfsschaltung erhöhen. Es hat sich in dieser Ausgestaltung zudem als besonders geeignet herausgestellt, dass das Federelement aus einem witterungsbeständigen Material wie Edelstahl ausgeführt wird. Diese Ausgestaltung ermöglicht einen besonders gleichmäßigen Schaltweg und kann auch hohe auftretende mechanische Belastungen kompensieren.

Innerhalb einer bevorzugten Ausgestaltung der Schalteranordnung kann der Kontaktarm des Hauptschalters zumindest an der Kontaktstelle zu den Betätigungselementen der Vakuum-Schaltkammer einen Bereich aus versilbertem Kupfer umfassen. Diese Art der Kontaktierung hat sich für den Hauptschalter im Rahmen der erfindungsgemäßen Ausgestaltung von Haupt- und Hilfsschalter als besonders langlebig herausgestellt. Die Anordnung ist für einen weiten Spannungs- und Strombereich geeignet und äußerst wartungsarm.

Hinsichtlich weiterer Vorteile und technischer Merkmale der Schalteranordnung wird auf die Beschreibung der Schalteranordnung, die Figuren und die Beschreibung der Figuren verwiesen, und umgekehrt.

Weitere Einzelheiten, Merkmale und Vorteile des Gegenstandes der Erfindung ergeben sich aus den Unteransprüchen sowie aus der nachfolgenden Beschreibung der Figuren und den zugehörigen Beispielen. In den Figuren zeigen die:
- Fig. 1: eine schematische Übersicht über die erfindungsgemäße Schalteranordnung;
- Fig. 2: eine schematische Übersicht über die erfindungsgemäße Schalteranordnung;
- Fig. 3A: eine schematische Übersicht über die erfindungsgemäße Schalteranordnung im geöffneten Zustand;
- Fig. 3B: eine Skizze der Schaltung der erfindungsgemäßen Schalteranordnung im geöffneten Zustand;
- Fig. 4A: eine schematische Übersicht über die erfindungsgemäße Schalteranordnung unter mechanischer Kontaktierung der Betätigungselemente;
- Fig. 4B: eine Skizze der Schaltung der erfindungsgemäßen Schalteranordnung unter mechanischer Kontaktierung der Betätigungselemente;
- Fig. 5A: eine schematische Übersicht über die erfindungsgemäße Schalteranordnung im geschlossenen Zustand des Hilfs- und noch offenen Zustand des Hauptschalters;
- Fig. 5B: eine Skizze der Schaltung der erfindungsgemäßen Schalteranordnung im geschlossenen Zustand des Hilfs- und noch offenen Zustand des Hauptschalters;
- Fig. 6A: eine schematische Übersicht über die erfindungsgemäße Schalteranordnung im geschlossenen Zustand des Hilfs- und Hauptschalters;
- Fig. 6B: eine Skizze der Schaltung der erfindungsgemäßen Schalteranordnung im geschlossenen Zustand des Hilfs- und Hauptschalters.

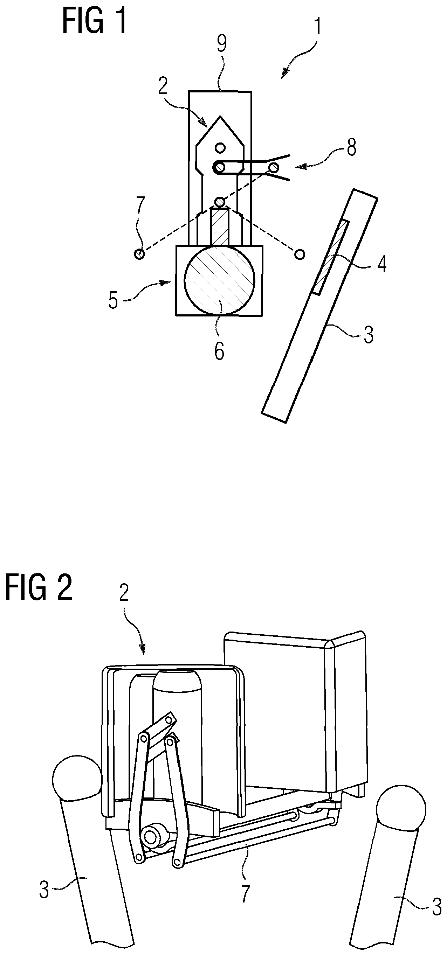

In der Figur 1 ist schematisch eine erfindungsgemäße Schalteranordnung 1 mit Hauptschalter und Hilfsschalter 2 dargestellt. Der Hauptschalter kann die Bauform eines Einsäulen-Trennschalter aufweisen, wobei die Kontaktanordnung mit einem oder zwei bewegbaren Kontaktarmen 3 ausgestattet sein kann, welche durch die Gestaltung der bewegten Kontakte auch als Kontaktleisten bezeichnet werden. Eine Ausführungsform mit zwei Kontaktarmen 3 ist in der Figur 2 dargestellt. Bekannt sind Kontakte aus Kupfer- oder Edelstahlstäben mit rundem und/oder rechteckigem Querschnitt, sowie Festkontakte aus Kupfer- oder Edelstahlstäben. Als Hilfsschalter wird eine Vakuum-Schaltkammer 2 verwendet, welche ein Betätigungselement 7 aufweist. In diesem Beispiel ist die Vakuum-Schaltkammer 2 Bestandteil des Fest-/Gegenkontaktes 6 des Einsäulen-Trennschalters und auf dem Montagelement 5 zur Montage der Vakuum-Schaltkammer 2 auf den Gegenkontakt 6 angeordnet. Der Gegenkontakt 6 bildet die stromführende Verbindung zum Hauptstrompfad. Das Betätigungselement 7 ist Bestandteil des Montagelementes 5 der Vakuum-Schaltkammer 2. Das Betätigungselement 5 der Vakuum-Schaltkammer 2 kann mit der Vakuum-Schaltkammer 2 fest verbunden, oder wie im Bild dargestellt, entkoppelt konstruiert sein. Im ausgeschalten Zustand können alle Teile mit freiem Potential über einen hochohmigen Widerstand mit dem Gegenkontakt 6 verbunden sein. Der hochohmige Widerstand hat keinen Einfluss auf die Schalthandlungen, aber verhindert Korona-Entladungen im ausgeschalteten Zustand der Vakuum-Schaltkammer 2. Ein Federelement (nicht dargestellt, 13) in der Vakuum-Schaltkammer 2 und/oder ein Federelement 13 zwischen den Betätigungselementen 7, zwingt das Hilfskontaktsystem ohne Krafteinwirkung durch die auf die Betätigungselemente 7 immer in den "Aus"-Zustand. Das Hilfskontaktsystem 2 wird durch die Kraftwirkung des beweglichen Hauptkontaktsystems 3 eingeschaltet und durch die Federelemente 13 des Hilfskontaktsystems ausgeschaltet, wenn die Kraftwirkung des oder der beweglichen Kontaktarme 3 durch Wegbewegung vom Gegenkontaktes 6 entfällt. Der Kontaktarm 3 kann dabei aus dem eigentlich beweglichen Element 3 und einer Kontaktleiste 4 gebildet werden, über die der Strom fließt. Die Vakuum-Schaltkammer 2 kann des Weiteren eine Betätigungsführung 8 in Form einer Edelstahlgabel an der Betätigung der Vakuum-Schaltkammer 2 aufweisen. Diese Betätigungsführung 8 kann zu einer besonders guten mechanischen Führung der Kontaktanordnung 1 beitragen. Die Betätigungselemente 7 können als Kupfer- und/oder Edelstahlstäbe ausgeführt sein. Durch den Einsatz der erfindungsgemäßen Anordnung ergeben sich die folgenden Vorteile:
- Läuft beim Schließvorgang des Trennschalters vor und schützt damit den Hauptkontakt (Schalten von Kommutierungsströmen, Vakuum-Schaltkammer 2 schließt)
- Läuft beim Öffnungsvorgang des Trennschalters nach und schützt damit den Hauptkontakt (Schalten von Kommutierungsströmen, Vakuum-Schaltkammer 2 öffnet)
- Nach- bzw. Vorlauf ist durch Kupfer- und/oder Edelstahlstäbe, das Betätigungselement 7, und die Vakuum-Schaltkammern 2 (Typ und Kennwerte) anpassbar weniger Kontakterosion durch schnelleres Löschen des Lichtbogens, und
- Erhöhung der schaltbaren Kommutierungsströme und -spannungen
- Hohe Bewegungsgleichmäßigkeit

Die Figur 2 zeigt eine Ausgestaltung der erfindungsgemäßen Schaltanordnung 1. Dargestellt sind zwei Kontaktarme 3 des Hauptschalters und die Vakuum-Schaltkammer 2 als Hilfsschalter. Die Vakuum-Schaltkammer 2 wird über die Kontaktarme 3 des Hauptschalters durch die Betätigungselemente 7 mechanisch geschaltet.

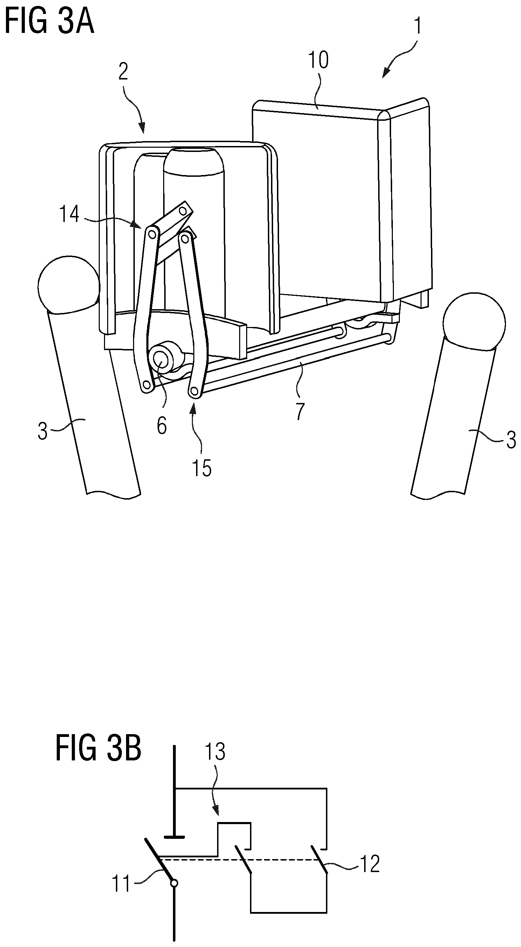

Die Figur 3A zeigt eine mögliche erfindungsgemäße Schalteranordnung 1 mit einem besonderen Ausschnitt auf die Vakuum-Schaltkammer 2 als Hilfsschalter. Dargestellt sind die Kontaktarme 3 des Hauptschalters, welcher ein Einsäulen-Trennschalter ist. Der Schalter ist in offener Stellung dargestellt und somit kontaktieren die Kontaktarme 3 das Gegenkontaktstück 6 der Vakuum-Schaltkammer 2 nicht. Die Betätigungselemente 7 der Vakuum-Schaltkammer 2 werden zudem von den Kontaktarmen 3 nicht berührt und somit ist der Schalter der Vakuum-Schaltkammer 2 offen. Der Schalter der Vakuum-Schaltkammer 2 ist dabei über die festen 15 und die beweglichen 14 Kontaktstellen mit dem Betätigungselement 7 verbunden. Beim Schließen des Strompfades des Schaltgerätes 1 nähern sich zuerst die beweglichen Kontaktarme 3 dem Betätigungselement 7 der Vakuum-Schaltkammer 2 als Hilfskontakt. Die Betätigungselemente 3 können als Kupfer- und/oder Edelstahlstäbe ausgeführt sein. Der Schalter der Vakuum-Schaltkammer 2 ist zu diesem Zeitpunkt noch offen und ein Überschlag bzw. ein Lichtbogen zwischen den Haupt- und Hilfskontakten kann nicht auftreten.

Die Figur 3B zeigt das entsprechende Schaltbild der in der Figur 3A dargestellten Konstellation. In dem Schaltbild ist zu sehen, dass Haupt- 11 und Hilfsschalter 12 jeweils offen sind. Der elektrische Schalter 12 der Vakuum-Schaltkammer 2 kann beispielsweise über ein mechanisches Federelement 13 im Schaltzustand "offen" gehalten werden. Erst unter mechanischer Betätigung der Betätigungselemente 7 durch die Kontaktarme 3 des Hauptschalters 11 wird der Schalter 12 in eine geschlossene Position bewegt (hier nicht dargestellt).

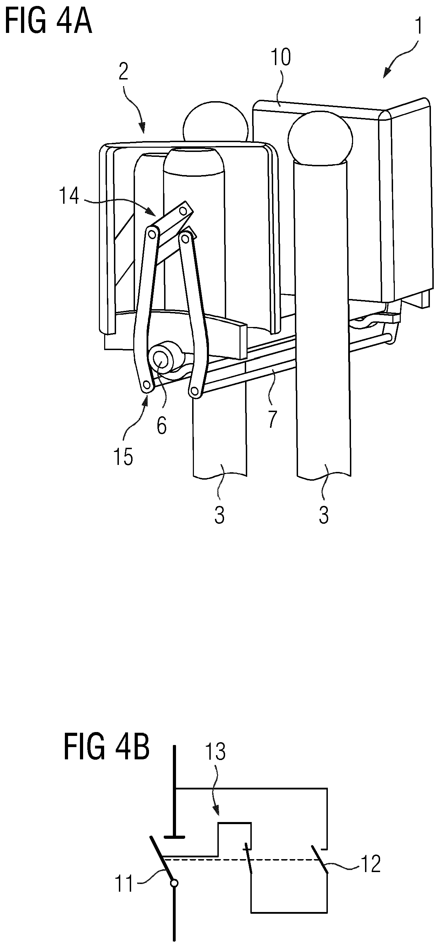

Die Figur 4A zeigt eine mögliche erfindungsgemäße Schalteranordnung 1 mit einem besonderen Ausschnitt auf die Vakuum-Schaltkammer 2 als Hilfsschalter. Die beweglichen Kontaktarme 3 bewegen sich weiter in Richtung "EIN" und kontaktieren die Betätigungselemente 7 der Vakuum-Schaltkammer 2. Der Schalter der Vakuum-Schaltkammer 2 ist dabei über die festen 15 und die beweglichen 14 Kontaktstellen mit dem Betätigungselement 7 verbunden. Die beweglichen Arme 3 sind jetzt elektrisch und mechanisch mit den Betätigungselementen 7 der Vakuum-Schaltkammer 2 als Hilfskontaktsystem verbunden. Das bewegliche Hauptkontaktsystem hat noch genügend Abstand zum Gegenkontakt des Hauptkontaktsystems, so dass es zu keinem elektrischen Überschlag kommen kann (z.B. durch eine Kommutierungsspannung).

Die Figur 4B zeigt das entsprechende Schaltbild der in der Figur 4A dargestellten Konstellation. Ein in der Vakuum-Schaltkammer vorhandenes Federelement 13 wird von nun an durch die weitere Bewegung der Kontaktarme 3 gespannt und bewegt den Schalter 13 der Vakuum-Schaltkammer 2 in den Zustand "geschlossen". Der Kontakte des Hauptschalter 11 befinden sich noch weiter voneinander entfernt in "Aus"-Stellung.

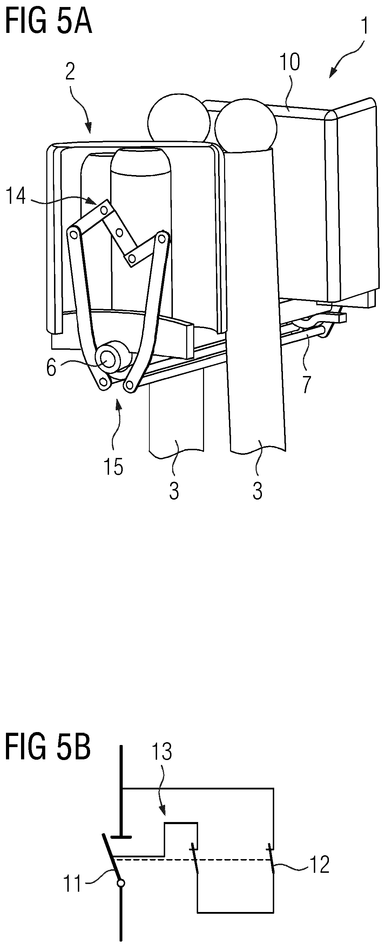

Die Figur 5A zeigt eine mögliche erfindungsgemäße Schalteranordnung 1 mit einem besonderen Ausschnitt auf die Vakuum-Schaltkammer 2 als Hilfsschalter. Im weiteren Bewegungsablauf des Strompfades wird die Vakuum-Schaltkammer 2 durch die mechanische Krafteinwirkung des beweglichen Kontaktsystems, der Kontaktarme 3, auf die Betätigungselemente 7 in den Zustand "Ein" geschaltet. Anliegende Spannungen (z.B. Kommutierungsspannung) können nun über die geschlossene Vakuum-Schaltkammer 2 abfließen, noch bevor die Hauptkontakte 3 über den Hauptstrompfad geschlossen sind.

Die Figur 5B zeigt das entsprechende Schaltbild der in der Figur 5A dargestellten Konstellation. In dem Schaltbild ist zu sehen, dass der Hauptschalter 11 noch offen und der Hilfsschalter 12 schon geschlossen ist. Das Federelement 13 ist nun gespannt.

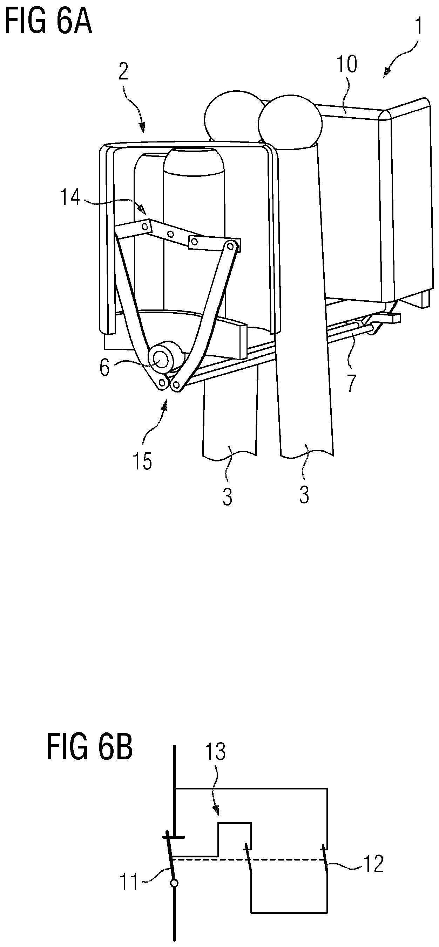

Die Figur 6A zeigt eine mögliche erfindungsgemäße Schalteranordnung 1 mit einem besonderen Ausschnitt auf die Vakuum-Schaltkammer 2 als Hilfsschalter. Sowohl der Haupt- 11 wie auch der Hilfskontakt 12 sind geschlossen. Der Kommutierungsstrom wird über die Hilfskontakte geführt und die Hauptkontakte bleiben geschützt, so dass sie spannungsfrei einlaufen können, ohne dass das Hauptkontaktsystem durch Lichtbogeneinwirkung beschädigt wird. Der Bewegungsablauf in "EIN" endet am Anschlag des festen Kontaktes 3 des Hauptkontaktsystems und das vorhandene Federelement des Hilfskontaktes ist vollständig gespannt. Die Vakuum-Schaltkammer 2 ist geschlossen und liegt im normalen Betrieb im Nebenschluss und ist somit unter anderem auch entsprechend kurzschlussfest.

Die Figur 6B zeigt das entsprechende Schaltbild der in der Figur 6B dargestellten Konstellation. In dem Schaltbild ist zu sehen, dass der Hauptschalter 11 und der Hilfsschalter 12 jeweils geschlossen sind. Das Federelement 13 ist gespannt.

Während der Ausschaltung findet folgender Prozess statt:
1. Während der Ausschaltung bewegen sich die Hauptkontakte 3 in Richtung "Aus".
2. Bei begonnener Trennung der Hauptkontakte 3 ist die Vakuum-Schaltkammer 2 noch geschlossen und führt den Kommutierungsstrom. Die Hauptkontakte 3 sind geschützt und können spannungsfrei auslaufen, ohne dass das Hauptkontaktsystem durch Lichtbogeneinwirkung beschädigt wird. Das Hilfskontaktsystem 2 beginnt jetzt, durch die vom integrierten Federelement 13 gespeicherte Kraft zu öffnen und die Betätigungselemente 7 folgen der Bewegung des beweglichen Hauptkontaktsystems 3. Damit bleibt die elektrische und mechanische Verbindung zwischen Hauptkontaktsystem 3 und Nebenkontaktsystem 7 erhalten. Das Federelement 13 erzeugt den notwendigen Kontaktdruck um die Betätigungselemente 7 gegen die Hauptkontakte 3 des beweglichen Hauptkontaktsystems zu drücken, bzw. die notwendige Kraft, um im nächsten Schritt die Vakuum-Schaltkammer 2 zu öffnen.
3. Im weiteren Verlauf wird das Hilfskontaktsystem 2 parallel zur Wegbewegung des beweglichen Hauptkontaktsystems 3 von dem darin enthaltenen Federelement 13 weiter geöffnet. Die Vakuum-Schaltkammer 2 schaltet in "AUS" und löscht den Lichtbogen des Kontaktabrisses sofort, so dass kaum Kontakterosion entsteht. Der Abstand des Hauptkontaktsystems 3 ist so groß, dass ein Überschlag/eine Rückzündung nicht mehr möglich ist. In einem passiven System würde der Lichtbogen so lange brennen, bis sich die beweglichen Kontakte 7 des Hilfskontaktsystems 2 weit genug entfernt haben, so dass der Lichtbogen erlischt.
4. Das bewegliche Hauptkontaktsystem 3 kann jetzt spannungsfrei die Betätigungselemente 7 des Hilfskontaktsystems 2 verlassen. Es erfolgt eine Trennung der elektrischen und mechanischen Verbindung zwischen dem beweglichen Hauptkontaktsystem 3 und dem Hilfskontaktsystem 7.

### Bezugszeichenliste

- 1: Schalteranordnung
- 2: Hilfsschalter
- 3: Kontaktarm
- 4: Kontaktleiste
- 5: Montagelemente
- 6: Gegenkontakt
- 7: Betätigungselement
- 8: Betätigungsführung
- 9: Montageelement
- 10: Abschirmkappe
- 11: Hauptschalter
- 12: Hilfsschalter
- 13: Federelement
- 14: bewegliche Kontaktstelle
- 15: feste Kontaktstelle

## Patentansprüche

1. Schalteranordnung (1) für einen luftisolierten Hochspannungs-Trennschalter mindestens umfassend einen Haupt- und einen Hilfsschalter,
wobei der Hauptschalter einen Einsäulen-Trennschalter mit mindestens einem beweglichen Kontaktarm (3) und einem feststehendem Gegenkontaktstück (6) umfasst; und
der Hilfsschalter eine Vakuum-Schaltkammer (2) mit einem elektrischen Schalter und mindestens einem an dem Schalter angeordneten Betätigungselement (7) umfasst, wobei die Vakuum-Schaltkammer (2) elektrisch leitend auf dem Gegenkontaktstück (6) des Hauptschalters angeordnet ist; und
wobei der elektrische Schalter der Vakuum-Schaltkammer (2) ausgebildet ist durch den beweglichen Kontaktarm (3) des Hauptschalters über das Betätigungselement (7) eine elektrisch leitende Verbindung zwischen dem Gegenkontakt (6) des Hauptschalters und dem beweglichen Kontaktarm (3) des Hauptschalters herzustellen oder zu unterbrechen, wobei das oder die Betätigungselemente (7) der Vakuum-Schaltkammer (2) mechanisch mit der Vakuum-Schaltkammer (2) gekoppelt angeordnet sind, dass der elektrische Schalter der Vakuum-Schaltkammer (2) vor dem Schließen des Hauptschalters schließt und nach dem Öffnen des Hauptschalters öffnet,
**dadurch gekennzeichnet, dass**
die Schalteranordnung (1) zusätzlich eine parallel zur Vakuum-Schaltkammer (2) geschaltete Schutzfunkenstrecke aufweist und eine erste Überschlagselektrode der Schutzfunkenstrecke an einem Ende der Drehwelle der Vakuum-Schaltkammer (2) und eine zweite Übergangselektrode der Schutzfunkenstrecke gegenüber auf dem Gegenkontakt (6) leitend montiert ist.

2. Schalteranordnung nach Anspruch 1, wobei der Hauptschalter zwei bewegliche Kontaktarme (3) und der Hilfsschalter zwei Betätigungselemente (7) umfasst.

3. Schalteranordnung nach einem der vorhergehenden Ansprüche, die Vakuum-Schaltkammer (2) über ein Verbindungsstück aus Stahl (5) oder aus Aluminium auf dem Gegenkontaktstück (6) des Hauptschalters angeordnet ist.

4. Schalteranordnung nach einem der vorhergehenden Ansprüche, wobei das Betätigungselement (7) der Vakuum-Schaltkammer (2) mindestens abschnittweise eine elektrisch isolierte Kontaktstelle aufweist.

5. Schalteranordnung nach einem der vorhergehenden Ansprüche, wobei die Vakuum-Schaltkammer (2) zusätzlich eine Abschirmhaube (10) aufweist und die Vakuum-Schaltkammer (2), die Betätigungselemente (7) und die Abschirmhaube (10) im nicht geschalteten Zustand jeweils über einen hochohmigen Widerstand mit dem Gegenkontaktstück (6) des Hauptschalters verbunden sind.

6. Schalteranordnung nach Anspruch 5, wobei die Abschirmhaube (10) mechanisch über einen nichtleitenden Träger auf dem Gegenkontakt (6) befestigt ist.

7. Schalteranordnung nach einem der vorhergehenden Ansprüche, wobei das Betätigungselement (7) der Vakuum-Schaltkammer (2) zusätzlich ein Federelement (13) aus Edelstahl umfasst.

8. Schalteranordnung nach einem der vorhergehenden Ansprüche, wobei der Kontaktarm (3) des Hauptschalters zumindest an der Kontaktstelle zu den Betätigungselementen (7) der Vakuum-Schaltkammer (2) einen Bereich (4) aus versilbertem Kupfer umfasst.

## Claims

1. A switch assembly (1) for an air-insulated high voltage disconnector, comprising at least one main switch and one auxiliary switch, wherein the main switch comprises a single-column disconnector with at least one movable contact arm (3) and a fixed mating contact piece (6); and
the auxiliary switch comprises a vacuum switching chamber (2) with an electrical switch and at least one actuating element (7) arranged on the switch, wherein the vacuum switching chamber (2) is arranged in an electrically conductive manner on the mating contact piece (6) of the main switch; and
wherein the electrical switch of the vacuum switching chamber (2) is configured to establish or interrupt, by the movable contact arm (3) of the main switch via the actuating element (7), an electrically conductive connection between the mating contact (6) of the main switch and the movable contact arm (3) of the main switch, wherein the actuating element(s) (7) of the vacuum switching chamber (2) are arranged mechanically coupled to the vacuum switching chamber (2), that the electrical switch of the vacuum switching chamber (2) closes before closing of the main switch and opens after opening of the main switch, **characterised in that** the switch assembly (1) additionally has a protective spark gap connected in parallel to the vacuum switching chamber (2) and a first spark-over electrode of the protective spark gap is conductively mounted at one end of the rotary shaft of the vacuum switching chamber (2) and a second transition electrode of the protective spark gap is conductively mounted opposite to the mating contact (6).

2. The switch assembly according to claim 1, wherein the main switch comprises two movable contact arms (3) and the auxiliary switch comprises two actuating elements (7).

3. The switch assembly according to any of the preceding claims, wherein the vacuum switching chamber (2) is arranged on the mating contact piece (6) of the main switch via a connecting piece made of steel (5) or aluminium.

4. The switch assembly according to any of the preceding claims, wherein the actuating element (7) of the vacuum switching chamber (2) has an electrically insulated contact point, at least in sections.

5. The switch assembly according to any of the preceding claims, wherein the vacuum switching chamber (2) additionally has a shielding cap (10) and, in the non-connected state, the vacuum switching chamber (2), the actuating elements (7) and the shielding cap (10) are each connected to the mating contact piece (6) of the main switch via a high-resistance resistor.

6. The switch assembly according to claim 5, wherein the shielding cap (10) is mechanically attached to the mating contact (6) via a non-conductive carrier.

7. The switch assembly according to any one of the preceding claims, wherein the actuating element (7) of the vacuum switching chamber (2) additionally comprises a spring element (13) made from stainless steel.

8. The switch assembly according to any one of the preceding claims, wherein the contact arm (3) of the main switch comprises an area (4) of silver-plated copper at least at the contact point to the actuating elements (7) of the vacuum switching chamber (2).

## Revendications

1. Agencement de commutation (1) pour un sectionneur haute tension à isolation dans l'air comprenant au moins un commutateur principal et un commutateur auxiliaire,
dans lequel
le commutateur principal comprend un sectionneur à colonne unique avec au moins un bras de contact mobile (3) et une pièce de contact antagoniste fixe (6) ; et
le commutateur auxiliaire comprend une chambre de coupure sous vide (2) avec un commutateur électrique et au moins un élément d'actionnement (7) disposé sur le commutateur, la chambre de coupure sous vide (2) étant disposée de manière électriquement conductrice sur la pièce de contact antagoniste (6) du commutateur principal ; et le commutateur électrique de la chambre de coupure sous vide (2) étant conçu pour établir ou interrompre, par l'intermédiaire de l'élément d'actionnement (7), une liaison électriquement conductrice entre la pièce de contact antagoniste (6) du commutateur principal et le bras de contact mobile (3) du commutateur principal au moyen du bras de contact mobile (3) du commutateur principal, le ou les éléments d'actionnement (7) de la chambre de coupure sous vide (2) étant couplés mécaniquement à la chambre de coupure sous vide (2) de telle sorte que le commutateur électrique de la chambre de coupure sous vide (2) se ferme avant la fermeture du commutateur principal et s'ouvre après l'ouverture du commutateur principal, **caractérisé en ce que**
l'agencement de commutation (1) présente en outre un éclateur de protection branché en parallèle à la chambre de coupure sous vide (2), et une première électrode d'amorçage de l'éclateur de protection est montée de manière conductrice à une extrémité de l'arbre rotatif de la chambre de coupure sous vide (2) et une deuxième électrode de transition de l'éclateur de protection est montée de manière conductrice à l'opposé sur la pièce de contact antagoniste (6).

2. Agencement de commutation selon la revendication 1, dans lequel le commutateur principal comprend deux bras de contact mobiles (3) et le commutateur auxiliaire comprend deux éléments d'actionnement (7).

3. Agencement de commutation selon l'une des revendications précédentes, dans lequel la chambre de coupure sous vide (2) est disposée sur la pièce de contact antagoniste (6) du commutateur principal par l'intermédiaire d'une pièce de liaison en acier (5) ou en aluminium.

4. Agencement de commutation selon l'une des revendications précédentes, dans lequel l'élément d'actionnement (7) de la chambre de coupure sous vide (2) présente, au moins par zones, un point de contact isolé électriquement.

5. Agencement de commutation selon l'une des revendications précédentes, dans lequel la chambre de coupure sous vide (2) présente en outre un capot de blindage (10), et la chambre de coupure sous vide (2), les éléments d'actionnement (7) et le capot de blindage (10) sont respectivement reliés, à l'état non commuté, à la pièce de contact antagoniste (6) du commutateur principal par l'intermédiaire d'une résistance de haute valeur ohmique.

6. Agencement de commutation selon la revendication 5, dans lequel le capot de blindage (10) est fixé mécaniquement sur la pièce de contact antagoniste (6) par l'intermédiaire d'un support non conducteur.

7. Agencement de commutation selon l'une des revendications précédentes, dans lequel l'élément d'actionnement (7) de la chambre de coupure sous vide (2) comprend en outre un élément de ressort (13) en acier inoxydable.

8. Agencement de commutation selon l'une des revendications précédentes, dans lequel le bras de contact (3) du commutateur principal comprend, au moins au niveau du point de contact avec les éléments d'actionnement (7) de la chambre de coupure sous vide (2), une zone (4) en cuivre argenté.
